# EUROPÄISCHE PATENTANMELDUNG

(11) **EP 4 420 649 A1**
(43) Veröffentlichungstag der Anmeldung: **28.08.2024**
(21) Anmeldenummer: 24157982.0
(22) Anmeldetag: 15.02.2024
(51) Int. Cl.: A61H 3/00

(54) **GEHHILFE**

(30) Priorität: 15.02.2023 DE 202023100730 U
(71) Anmelder: Ruckdäschel, Karlheinz, 79597 Schallbach (DE)
(72) Erfinder: Ruckdäschel, Karlheinz, 79597 Schallbach (DE)
(74) Vertreter: Tahhan, Nader Isam Mark

(57) **Zusammenfassung**

Die Erfindung betrifft das Gebiet der Gehhilfen. Genauer betrifft die Erfindung eine Gehhilfe beispielsweise zum Treppensteigen, sowie ein Verfahren zum Ausgleichen der Lage einer Gehhilfe auf unebenem Untergrund.

Die Gehhilfe umfasst zwei beidseitig an der Oberseite (11) eines Gestells (10) angebrachte Handgriffe (20), sowie mindestens insgesamt drei an der vorderen und hinteren Unterseite (12A, 12B) des Gestells verteilte Füße (40), und ferner mindestens zwei in ihrer Längsausdehnung verstellbare Ausgleichsbeine (43), welche jeweils ein mit einem Fluid beaufschlagbares, variables Innenvolumen aufweisen, wobei deren Länge von der Menge des jeweils in diesem Innenvolumen aufgenommenen Fluids abhängt; und eine Feststelleinrichtung (30), mittels welcher ein Fluss zwischen den Ausgleichsbeinen (43) verhinderbar ist.

Dabei sind die mindestens zwei Ausgleichsbeine (43) an einem Gestell (10) der Gehhilfe angeordnete Beine, und durch manuelles Belasten eines Ausgleichsbeins (43) ist bei geöffneter Feststelleinrichtung (30) das Fluid aus dessen Innenvolumen heraus in das oder die anderen Ausgleichsbeine (43) förderbar und so dieses Ausgleichsbein (43) verkürzbar, wohingegen das oder die Fluid aufnehmenden Ausgleichsbeine (43) dadurch verlängerbar sind.

Somit ist die Ausrichtung der Gehhilfe durch manuelles Belasten eines odermehrerer Ausgleichsbeine (43) veränderbar.

## Beschreibung

### Einleitung

Die Erfindung betrifft das Gebiet der Gehhilfen. Genauer betrifft die Erfindung eine Gehhilfe beispielsweise zum Treppensteigen, sowie ein Verfahren zum Ausgleichen der Lage einer Gehhilfe auf unebenem Untergrund.

### Stand der Technik und Nachteile

Gehhilfen sind aus dem Stand der Technik in vielerlei Ausprägungen bekannt. Sie dienen der Unterstützung von Personen beim Gehen. Die Notwendigkeit zur Verwendung einer Gehhilfe kann z.B. aufgrund einer Verletzung oder altersbedingten Ermüdungserscheinungen nötig sein.

Die einfachsten Formen einer Gehhilfe sind sogenannte Gehstöcke, Unterarmgehstützen oder Achselstützen. Dabei liegen zwei separate Komponenten vor, von denen eine in jeder Hand, an jedem Arm, bzw. in jeder Achsel anliegt. Durch abwechselndes Abstützen der beiden Seiten wird das jeweiligen Bein beim Gehen entlastet.

Eine weitere Form einer Gehhilfe stellen fahrbare Gehhilfen dar, beispielsweise der sogenannte Rollator. Hierbei handelt es sich um ein Gestell mit beidseitigen Handgriffen, an dessen Unterseite drei oder vier Rollen angebracht sind, so dass sich das Gestell vorwärts schieben lässt, während der Benutzer sich an diesem abstützt.

Zwar sind aus zwei Stützen bestehende Gehhilfen einfacher aufgebaut und auch zum Treppensteigen verwendbar, ermüden jedoch den Benutzer schneller, und verlangen ihm ein gewisses Maß an Geschick und Kraft ab, da beim Gehen immer nur eine Seite mit dem Boden in Kontakt kommt. Demgegenüber sind fahrbare Gehhilfen komplexer im Aufbau und dementsprechend schwerer, bieten dafür mehr Sicherheit besonders für gebrechliche Personen, da sich diese jederzeit beidhändig am Gestell abstützen können, welches zudem immer Bodenkontakt hat. Allerdings lassen sich mit derartigen Gestellen keine Treppen empor- oder herabsteigen.

Zum Überwinden von Stufen sind zwar treppengängige Rollstühle bekannt, beispielsweise aus Druckschrift DE 4 231 876 A, oder für Rollstühle vorgesehene Zusatzvorrichtungen, bekannt z.B. aus WO 2005/099646 A1; ein Rollstuhl wird jedoch in den meisten Fällen vom Benutzer zum normalen Vorwärtsklommen gar nicht benötigt. Zudem sind derartige Lösungen sehr aufwändig.

### Aufgabe der Erfindung und Lösung

Der Erfindung liegt demnach die Aufgabe zugrunde, eine Gehhilfe und ein Verfahren zu ihrer Verwendung bereitzustellen, welche bzw. welches die Nachteile des Standes der Technik vermeidet.

Demnach soll die Gehhilfe die Sicherheit einer fahrbaren Gehhilfe bieten, aber auch zur Verwendung auf Treppen geeignet sein, und ohne Fremdenergie auskommen.

Die Aufgabe wird durch eine Gehhilfe nach Anspruch 1 sowie ein Verfahren nach nebengeordnetem Anspruch 8 gelöst. Vorteilhafte Ausführungsformen sind den jeweils abhängigen Unteransprüchen, der nachfolgenden Beschreibung sowie den Figuren zu entnehmen.

### Beschreibung

Die erfindungsgemäße Gehhilfe dient deren Ausrichtung in eine vorgebbare Lage. Diese kann insbesondere aufrecht sein, um ein Umfallen der Gehhilfe auf einem schrägen Untergrund zu verhindern, oder einem Wackeln der Gehhilfe auf unebenem Untergrund vorzubeugen. Es ist aber auch denkbar, dass eine Lage gewünscht ist, welche nicht-vertikal oder aufrecht ist, beispielsweise dann, wenn die Gehhilfe seitlich gekippt sein darf.

Die Gehhilfe umfasst folgende Komponenten:
- ein Gestell, zwei beidseitig an der Oberseite des Gestells angebrachte Handgriffe, eine Feststelleinrichtung, sowie mindestens insgesamt drei an der vorderen und hinteren Unterseite des Gestells verteilte Füße, welche an entsprechenden Beinen angebracht sind.

Die Verteilung der Füße am Gestell ist dabei so gewählt, dass sowohl an der vorderen als auch an der hinteren Unterseite mindestens ein Fuß vorhanden ist. Für den Fall von drei Füßen bedeutet dies, dass ein Fuß an der Vorder-, und zwei Füße an der Hinterseite angeordnet sind, oder umgekehrt. Anders ausgedrückt, von den mindestens drei Füßen ist immer mindestens ein Fuß an der vorderen und an der hinteren Unterseite angeordnet; andernfalls würde das Gestell auch nicht fest aufstellbar sein, und nach vorne oder hinten kippen. Mindestens ein weiterer Fuß ist an der vorderen oder an der hinteren Unterseite angeordnet, so dass auch ein seitliches Kippen vermieden wird.
- Mindestens zwei in ihrer Längsausdehnung verstellbare Ausgleichsbeine, welche jeweils ein mit einem Fluid beaufschlagbares, variables Innenvolumen aufweisen, wobei deren Länge von der Menge des jeweils in diesem Innenvolumen aufgenommenen Fluids abhängt. Das Ausgleichsbein ist demnach nach Art eines fluid-betreibbaren Zylinders mit Kolben ausgestaltet. Der im Zylinder gelagerte Kolben wird bei Fördern von Fluid in das Innenvolumen des Zylinders herausgeschoben, und umgekehrt. (Es sei hinzugefügt, dass auch gerade umgekehrt wirkende Konstruktionen bekannt sind, welche jedoch ebenso einsetzbar sind.)

Der Begriff "Länge" meint vorliegend genauer den Abstand zwischen einem ersten Ende und einem zweiten Ende des Ausgleichsbeins. Es ist demnach zwar möglich, dass das Ausgleichsbein eine in wesentlichen lineare Form hat, aber auch, dass es beispielsweise zwei (oder mehr) über jeweils ein Gelenk miteinander verbundene Schenkel umfasst, deren eingeschlossener Winkel durch Erhöhung des Innenvolumens veränderbar ist. Wenn nachfolgend vereinfachend von "Kolben" und "Zylinder" gesprochen wird, umfassen diese Bezeichnungen auch sinngemäße Ausführungsbeispiele für nichtlinear längenausgebildete Konstruktionen von Ausgleichsbeinen.
- eine Feststelleinrichtung, mittels welcher ein Fluss zwischen den Ausgleichsbeinen verhinderbar ist. Die Feststelleinrichtung ist bevorzugt als ein Ventil ausgestaltet, welches wahlweise den Fluidfluss freigibt oder unterbricht. Bevorzugt ist es so beschaffen, dass es vom Typ "normally closed" ist, also ohne äußere Bestätigung geschlossen ist.

Die Ausgleichsbeine erfüllen zugleich die Aufgabe der an einem Gestell der Gehhilfe angeordneten "normalen" Beine, bzw. ersetzen diese. Das bedeutet, dass sie entweder ein "normales" Bein vollständig ersetzen, oder in dieses so eingebaut sind, dass es längenverstellbar und somit funktionell zu einem Ausgleichsbein wird. Je nach Notwendigkeit kann am unteren Ende eines Ausgleichsbeins ein Fuß vorgesehen sein; dieser wird als dem Ausgleichsbein zugehörig angesehen und daher nachfolgen nicht extra erwähnt.

Erfindungsgemäß ist durch manuelles Belasten eines Ausgleichsbeins bei geöffneter Feststelleinrichtung das Fluid aus dessen Innenvolumen heraus in das oder die anderen Ausgleichsbeine förderbar und somit verkürzbar, wohingegen das oder die Fluid aufnehmenden Ausgleichsbeine dadurch verlängerbar sind.

Das bedeutet zunächst, dass beim Belasten das Fluid aus dem belasteten Bein herausfließt, da beim Belasten dieses Ausgleichsbeins dessen Kolben in dessen Zylinder gepresst wird. Dies verringert das Innenvolumen dieses Ausgleichsbeins, sofern das Fluid tatsächlich das Innenvolumen verlassen kann. Dies wird durch die Feststelleinrichtung gesteuert. Anders ausgedrückt, eine Belastung des Ausgleichsbeins führt nur dann auch zu einem Verkürzen desselben, wenn die Feststelleinrichtung geöffnet ist. Andernfalls behält das Ausgleichsbein seine Längenausdehnung. Erfindungsgemäß fließt das aus dem belasteten Ausgleichsbein gepresste Fluid nun nicht, wie aus dem Stand der Technik bekannt, in einen Ausgleichsbehälter, sondern in das oder die anderen Ausgleichsbeine. Dies führt zu einem Verlängern derselben, so dass der Schwerpunkt der Gehhilfe um eine "virtuelle konvexe Oberfläche" kippt, welche sich unterhalb des Schwerpunkts befindet, vergleichbar mit einem Kugelgelenk, welches zwei Freiheitsgrade aufweist.

Auf diese Weise ist die Ausrichtung der Gehhilfe durch manuelles Belasten eines oder mehrerer Ausgleichsbeine veränderbar. Sobald die gewünschte Lage erreicht ist, wird die Feststelleinrichtung vom offenen in den geschlossenen Zustand versetzt, so dass ein weiterer Fluidaustausch unterbunden wird. Somit ist eine weitere Längenänderung - auch bei fortwährender Belastung - verhinderbar, und die Gehhilfe verbleibt in der eingestellten Ausrichtung.

Es ist klar, dass in einer ausgeglichenen Lage der Gehhilfe (z.B. horizontale Ausrichtung, wenn diese tatsächlich auf einem ebenen und horizontalen Untergrund steht) alle Ausgleichsbeine in etwa zur Hälfte herausgefahren sein sollten; andernfalls stünde u.U. nicht jeweils der volle Hub zur Verfügung, die maximale Bewegbarkeit wäre u.U. nicht gegeben.

Es ist außerdem klar, dass die Erfindung sinngemäß auch mit solchen Zylindern anwendbar ist, die bei Belastung Fluid ansaugen, beispielsweise, weil der Zufluss zwischen Kolben und Spitze, anstatt zwischen Kolben und Ende angeordnet ist. Demnach fließt das Fluid bei Belastung in den belasteten Zylinder hinein, und würde dabei aus den weniger belasteten Zylindern herausgesogen.

Die Erfindung vermeidet somit die aus dem Stand der Technik bekannten Nachteile.

Eine die Gehhilfe benutzende Person stützt sich an den Handgriffen ab, und bewegt die Gehhilfe entweder schrittweise, oder mittels Rollens vorwärts. Dabei ist es wichtig, dass die Gehhilfe in einer im Wesentlichen aufrechten Position ist, um ein Kippen bei Belastung durch die sich abstützende Person zu verhindern.

Ist jedoch der Untergrund ansteigend oder abfallend, oder bewegt sich die Person auf einer Treppe, so ist bei einer herkömmlichen Gehhilfe mit Beinen unveränderbarer Länge ein Kippen sehr wahrscheinlich, da sich der Schwerpunkt der von der Person belasteten Gehhilfe, von oben gesehen, schnell außerhalb der durch die Füße aufgespannten Fläche befindet. Mittels der erfindungsgemäßen Gehhilfe ist es hingegen möglich, auch dann, wenn sich die Ausrichtung oder Beschaffenheit des Untergrundes häufig ändert, die Gehhilfe auf einfache, schnelle und sichere Weise immer wieder so neu auszurichten, dass sich der besagte Schwerpunkt immer innerhalb der besagten Fläche befindet, und so ein Kippen zu vermeiden. Bei einem zu weit nach vorne verschobenen Schwerpunkt werden das oder die vorderen Ausgleichsbeine verlängert und das oder die hinteren verkürzt, und umgekehrt. Ebenso kann ein seitlich verschobener Schwerpunkt wieder in den Bereich besagter Fläche, und besonders bevorzugt in etwa in deren Mittelpunkt, verschoben werden.

Die Erfindung erlaubt ein einfache, schnelle und sichere Ausrichtung der mit ihr ausgestatteten Gehhilfe. Die Ausrichtung ist einfach, weil das Ausrichten der Gehhilfe intuitiv durch einfaches Belasten und Kippen in die gewünschte Richtung erfolgt. Sie ist schnell, weil lediglich eine einzige Feststelleinrichtung betätigt werden muss, um den Gegenstand kippen zu können, und ihn anschließend wieder zu fixieren. Sie ist zudem auch sicher, weil eine die Gehhilfe ausrichtende Person zur Ausrichtung auf derjenigen Seite der Gehhilfe steht, von welcher dieser weg kippt, um sie zu belasten, so dass die Gehhilfe, sollte sie umkippen, sich von der Person fortbewegt. Die Erfindung bietet dem Benutzer der erfindungsgemäßen Gehhilfe die Sicherheit einer fahrbaren Gehhilfe, da das abwechselnde Anheben und Absenken zweiter voneinander getrennter Seiten entfällt. Gleichzeitig ist die erfindungsgemäße Gehhilfe auch zur Verwendung auf Treppen oder Schrägen geeignet. Fremdenergie ist zu ihrem Betrieb nicht notwendig. Wie nachfolgend gezeigt wird, ist die Konstruktion auf verhältnismäßig einfache Weise möglich, was vorteilhaft ist.

Nachfolgend werden verschiedene Ausführungsformen der Erfindung näher beschrieben.

Nach einer bevorzugten Ausführungsform ist der vertikale Abstand der an einer vorderen Unterseite und/oder der an einer hinteren Unterseite angeordneten Füße von den Handgriffen (d.h., wahlweise dem rechten oder dem linken Griff) bei gelöster Feststelleinrichtung derart variabel, dass der Schwerpunkt der an den Handgriffen belasteten Gehhilfe in vertikaler Richtung gesehen auch bei schrägem Untergrund jederzeit zwischen die an der vorderen und an der hinteren Unterseite angeordneten Füße verschiebbar ist.

Stützt sich eine die Gehhilfe benutzende Person an den Handgriffen ab, und steht die Gehhilfe auf horizontalem Untergrund, sollte der Schwerpunkt, von oben, also in vertikaler Richtung, gesehen, zwischen den an der vorderen und hinteren Unterseite angeordneten Füßen liegen. Denn dann ist sichergestellt, dass bei Belastung des Gestells dieses weder nach vorne noch nach hinten kippt. Besonders bevorzugt ist der Schwerpunkt in etwa mittig zwischen den an der vorderen und hinteren Unterseite angeordneten Füßen angeordnet; dann ist die Kippgefahr in beide Richtungen in etwa gleich gering.

Befindet sich nun die Gehhilfe auf schrägem Untergrund, soll sie weiterhin eine möglichst große Sicherheit gegen ein Kippen bieten. Dies ist dann der Fall, wenn auch bei schrägem Untergrund der Schwerpunkt, von oben gesehen, weiterhin zwischen den an der vorderen und hinteren Unterseite angeordneten Füßen liegt.Nach einer bevorzugten Ausführungsform sind die Ausgleichsbeine als einfachwirkende Fluidzylinder ausgestaltet. Das bedeutet, dass sie bei Erhöhung des Innendruckes ausfahren, jedoch zum Wiedereinfahren mechanisch belastet werden müssen. Derartige Hydraulik-/Pneumatikzylinder sind besonders einfach aufgebaut und kostengünstig; zudem benötigen sie nur eine einzelne Druckleitung, durch die das Fluid ein- und auch wieder ausströmen kann. Die zum Einfahren benötigte Energie wird in diesem Falle einfach durch mechanisches Zusammendrücken des Hydraulikzylinders bereitgestellt. Besonders bevorzugt erfolgt dies, indem das Ausgleichsbein durch die Person belastet wird, welche den Gegenstand ausrichtet.

Nach einer anderen Ausführungsform sind die Ausgleichsbeine als doppeltwirkende Fluidzylinder ausgestaltet. Demnach befindet sich beiderseits des im Zylinder bewegbaren Kolbens ein mit dem Fluid gefülltes (Teil-)Volumen. Der Kolben trennt beide Volumina dichtend voneinander. Alle hinter den jeweiligen Kolben der Ausgleichsbeine (d.h. rückseitig, wie beim einfachwirken Zylinder) befindlichen Volumina sind fluidisch miteinander verbunden (erster Kreislauf), und zusätzlich sind auch alle vor den jeweiligen Kolben der Ausgleichsbeine befindlichen Volumina, separat vom ersten Kreislauf, ebenfalls fluidisch miteinander verbunden (zweiter Kreislauf). Zudem weist die Gehhilfe für jeden Kreislauf eine eigene Feststelleinrichtung auf. Das bedeutet, dass die Kreisläufe fluidisch jederzeit voneinander getrennt bleiben.

Werden nun beide Feststelleinrichtungen zeitgleich geöffnet, so kann - wie bei der weiter oben beschriebenen, einfachwirkende Zylinder umfassenden Ausführungsform auch - Fluid zwischen den Volumina der Ausgleichsbeine strömen, wobei dies nunmehr separat innerhalb des ersten bzw. zweiten Kreislaufes erfolgt, so dass die Längen der Ausgleichsbeine wiederum veränderbar sind. Ebenso fixiert ein Schließen der beiden Feststelleinrichtungen alle Ausgleichsbeine.

Der Vorteil dieser Ausführungsform liegt darin, dass die Position der einzelnen Kolben nicht nur dann stabil bleibt, wenn diese auf Druck (durch das Eigengewicht des Gegenstands oder die benutzende Person) belastet werden, sondern auch dann, wenn an den Kolbenstangen gezogen wird, so dass sich ein Unterdruck im Halbvolumen hinter dem Kolben bildet. Bei einfachwirkenden Hydraulikzylindern kann Zug an der Kolbenstange zu einer Vakuumblase im Bereich hinter dem Kolben (also im Fluidvolumen des "ersten" und einzigen Kreislaufs) führen. Demnach würde eine Gehhilfe, die beispielsweise im Boden festgeklemmt ist, beim Ziehen instabil werden können, da hierbei auch Zugkräfte auf die dann mit dem Boden (beispielsweise über einen Fuß) "verbundenen" Ausgleichsbeine wirken, so dass sich besagte Vakuumblasen bilden könnten. Dies ist bei zweifachwirkenden Zylindern ausgeschlossen, da ein Zug auf den Kolben lediglich dazu führt, dass sich der Druck im Halbvolumen vor dem Kolben erhöht, was aufgrund der Inkompressibilität des Fluids zu keinem Nachgeben des Kolbens führt; zugleich wird sich somit auch auf der Unterdruckseite des Kolbens keine Vakuumblase mehr bilden.

Die beschriebene Ausführungsform ist somit insbesondere immer dann vorteilhaft, wenn die Beine der Gehhilfe auch Zugkräfte aufnehmen müssen.

Vorzugsweise ist die Feststelleinrichtung manuell von einer Ruheposition in eine Arbeitsposition betätigbar, und zwar unmittelbar, beispielsweise durch Schieben eines Ventilbolzens, oder indirekt, beispielsweise mittels eines Seilzuges. Dabei sind besagte Ausgleichsbeine in der Ruheposition fluidisch voneinander trennbar, und in der Arbeitsposition fluidisch miteinander verbindbar. Mit anderen Worten, die Feststelleinrichtung trennt in der Ruheposition, in welcher sie sich während der Verwendung der Gehhilfe befindet, die Fluidverbindungen voneinander. Nur bei aktiver Betätigung durch eine Bedienperson gibt sie die fluidische Verbindung zwischen den Ausgleichsbeinen frei.

Nach einer besonders bevorzugten Ausführungsform ist das Fluid eine Hydraulikflüssigkeit wie Öl oder Wasser. Zwar ist auch ein Betrieb mit Luft, insbesondere Druckluft, denkbar; Flüssigkeiten bieten jedoch den Vorteil praktischer Inkompressibilität, so dass ein einmal ausgerichteter Gegenstand auch bei weiterer Belastung fest steht und nicht etwa "federt". Allerdings kann dieses "federn" in bestimmten Fällen auch erwünscht oder zumindest toleriert sein; beispielsweise dann, wenn Gewicht gespart werden soll.

Nach einer weiteren Ausführungsform umfasst die Gehhilfe einen separaten Ausgleichsbehälter, welcher mit den Ausgleichsbeinen fluidisch verbunden ist, und dessen Volumen manuell oder automatisiert veränderbar ist. Auf diese Weise lässt sich das fluidische System insgesamt mit mehr oder weniger Fluid füllen, was zu einem gleichmäßigen Aus- oder Einfahren aller Ausgleichsbeine einhergeht. Somit lässt sich die Höhenlage des Gegenstands anpassen, wobei klar ist, dass bei einem Erreichen einer Maximallage eines Ausgleichsbeins dieses nicht weiter ein- bzw. ausfahren kann. Nichtsdestotrotz kann eine Anpassung der Höhenlage in gewissen Maßen vorteilhaft sein, beispielsweise zum genauen Anpassen der Höhenlage einer Gerüstbühne oder Plattform.

Ein weiterer Vorteil der Möglichkeit, alle Ausgleichsbeine zugleich einzufahren, liegt in der Verkleinerung der Außenmaße der Gehhilfe, was beispielsweise beim Transport oder Verstauen derselben hilfreich sein kann.

Es ist klar, dass bei Vorliegen von zwei Kreisläufen auch zwei getrennte Ausgleichsbehälter vorzusehen sind.

Nach einer bevorzugten Ausführungsform der Gehhilfe umfasst diese vier Beine, von denen zwei an der Vorderseite und zwei an der Hinterseite angeordnet sind. Die beiden vorderen Beine, und/oder die beiden hinteren Beine, und besonders bevorzugt alle Beine sind erfindungsgemäße Ausgleichsbeine. Demnach kann die Gehhilfe sowohl vorwärts/rückwärts, als auch zu beiden Seiten hin gekippt werden.

Die Feststelleinrichtung ist vorzugsweise mittels eines an einer Oberseite des Gestells angeordneten Hebels betätigbar, beispielsweise über einen Seilzug, oder indem sie selber am Handgriff angeordnet ist. Auf diese Weise kann eine die Gehhilfe benutzende Person ohne Umzugreifen die Ausrichtung der Gehhilfe an den jeweiligen Untergrund anpassen.

Die Gehhilfe kann anstelle fester Füße auch Rollen umfassen, wobei diese dann an den untenliegenden Enden der Ausgleichsbeine angebracht und besonders bevorzugt bremsbar sind.

Die Gehhilfe kann auch mit einem Lagesensor verbunden sein, welcher bei einem Erreichen einer bestimmten, gewünschten Lage, oder vor Erreichen einer gefährlichen Ausrichtung (Schwerpunkt zu nah über den Ausgleichsbeinen) die Feststelleinrichtung schließt.

Die Erfindung betrifft auch ein Verfahren zur Verwendung einer Gehhilfe nach der vorhergehenden Beschreibung. Das Verfahren umfasst die folgenden Schritte:
- Bereitstellen der Gehhilfe;
- Abstellen der Gehhilfe auf einem Untergrund;
- Lösen der Feststelleinrichtung;
- Auswahl mindestens eines zu verkürzenden Ausgleichsbeins;
- manuelles Belasten dieses Ausgleichsbeins und somit Fördern von Fluid aus diesem hinaus (bzw., bei inverser Konstruktion, in dieses hinein), sowie
- zeitgleiches Aufnehmen dieses herausgeförderten Fluids in alle anderen Ausgleichsbeine (bzw. zeitgleiches Ausgeben dieses hineingeförderten Fluids aus allen anderen Ausgleichsbeinen), welche geringer als das manuell belastete Ausgleichsbein belastet sind, so dass sich diese verlängern.

Die Schritte des Belastens und das damit verbundene Verkürzen eines Ausgleichsbeines (oder auch mehrerer Ausgleichsbeine), sowie das entsprechende Verlängern eines oder mehrerer übriger Ausgleichsbeine wird durchgeführt, bis die gewünschte Ausrichtung der Gehhilfe erreicht ist.

Alsdann erfolgt ein Verschließen der Feststelleinrichtung, so dass kein Fluid mehr zwischen den Ausgleichsbeinen strömen kann. Somit steht die Gehhilfe fest in der zuletzt eingenommenen Ausrichtung und kann nunmehr bei der Benutzung belastet werden, ohne dass sich ihre Ausrichtung weiter ändert.

Der Vorteil des erfindungsgemäßen Verfahrens liegt in der Einfachheit, Geschwindigkeit und Sicherheit bei der Anwendung; zur Vermeidung von Wiederholungen wird auf die obenstehenden Erläuterungen verwiesen.

Sofern die Gehhilfe über den weiter oben beschriebenen Ausgleichsbehälter verfügt, kann manuell oder automatisiert zur Erhöhung der Länge aller Ausgleichsbeine Fluid aus dem Ausgleichsbehälter in die Ausgleichsbeine hinein, oder zur Reduzierung der Länge aller Ausgleichsbeine Fluid aus diesen hinaus in den Ausgleichsbehälter gefördert werden. Es ist klar, dass dazu zunächst die Feststelleinrichtung geöffnet werden muss.

Eine Gehhilfe der vorbeschriebenen Art wird zu ihrer auch bei Belastung kippfreien Aufstellung so verwendet, dass die vertikalen Abstände zwischen den Handgriffen und den einzelnen Füßen solange variiert werden, bis sich der Schwerpunkt der an den Handgriffen belasteten Gehhilfe in vertikaler Richtung gesehen auch bei schrägem Untergrund zwischen die an der vorderen und der hinteren Unterseite angeordneten Füße verschiebt. Auf die weiter oben stehenden Erläuterungen wird zur Vermeidung von Wiederholungen verwiesen.

### Figurenbeschreibung

Nachfolgend wird die Erfindung anhand von eine Gehhilfe zeigenden Figuren beispielhaft erläutert. Dabei zeigt
- **Figur 1**: eine Vorderansicht einer Gehhilfe mit vier Ausgleichsbeinen;
- **Figur 2**: eine Seitenansicht dieser Gehhilfe;
- **Figur 3 und Figur 4**: weitere Seitenansichten dieser Gehhilfe bei schrägem Untergrund;

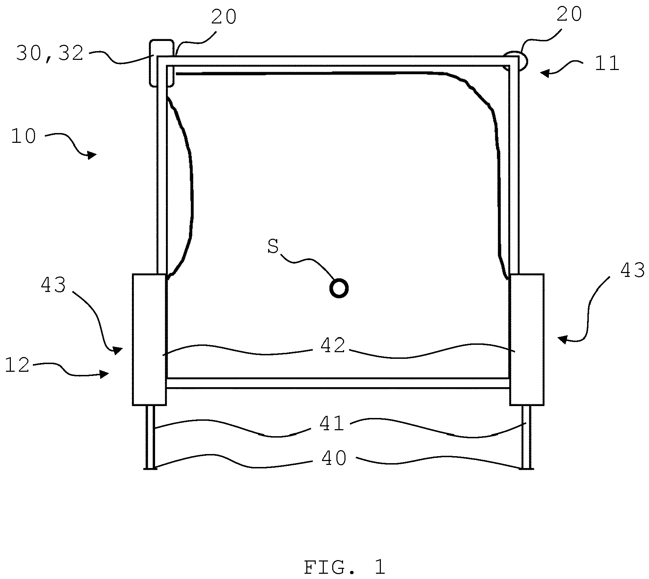

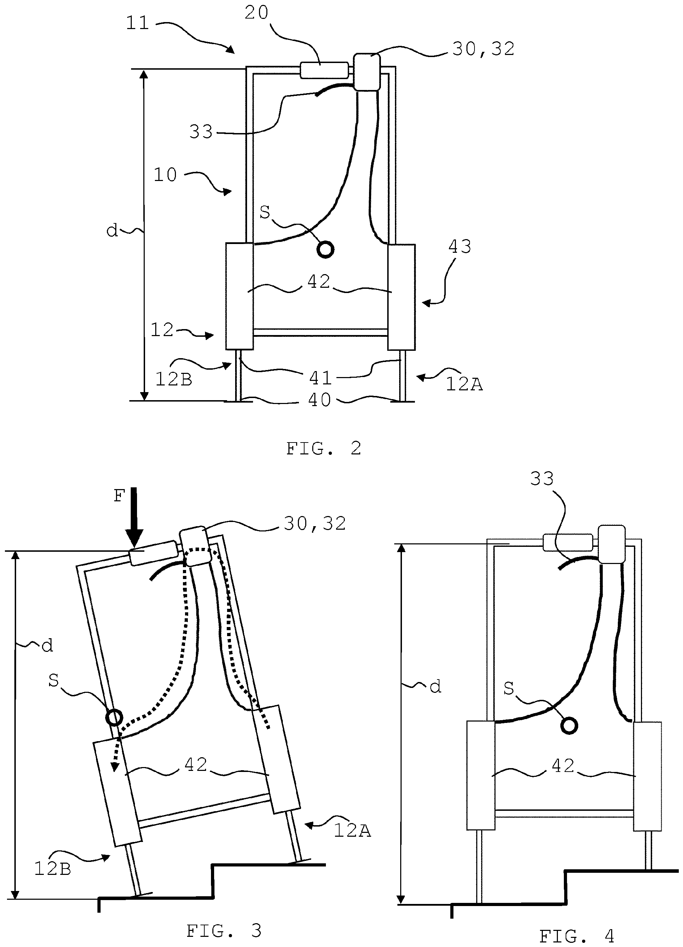

In **Figur 1** und **Figur 2** ist eine Vorder- und Seitenansicht einer Gehhilfe mit vier Ausgleichsbeinen gezeigt.

An einem Gestell 10 sind an dessen Oberseite 11 zwei Handgriffe 20 angeordnet. Ebenfalls vorhanden ist eine Feststelleinrichtung 30.

An der vorderen und hinteren Unterseite 12A, 12B des Gestells 10 sind Füße 40 angeordnet.

Der in vertikaler Richtung G gemessene vertikale Abstand d bezeichnet im gezeigten Ausführungsbeispiel die Strecke zwischen den an der hinteren Unterseite 12B angeordneten Füßen 40 von den Handgriffen 20.

Nach diesem Ausführungsbeispiel sind alle an der vorderen und hinteren Unterseite 12A, 12B angeordneten Füße 40 an Ausgleichsbeinen 43 befestigt, deren Länge variierbar ist. Die Ausgleichsbeine 43 umfassen hierfür einfachwirkende Fluidzylinder 42 mit Kolben 41, an deren unteren Enden die Füße 40 angeordnet sind. Sämtliche Fluidzylinder 42 sind über die in Form eines gemeinsamen Ventils 32 vorliegende Feststelleinrichtung 30 fluidisch miteinander verbunden. Das Ventil 32 ist blockierbar, so dass alle Fluidzylinder 42 wahlweise auch fluidisch voneinander trennbar sind. Der Hebel 33 zur Betätigung des Ventils 32 ist im Bereich der an der Oberseite 11 des Gestells 10 angebrachten Handgriffe 20 angeordnet.

**Figur 3** zeigt die Situation an einer Treppenstufe. Die auf einen horizontalen Untergrund eingestellte Gehhilfe kippt nach hinten, der Schwerpunkt S befindet sich in etwa oberhalb des hinteren Fußes (ohne Bezugszeichen). Wird nun die Gehhilfe durch eine Person (nicht eingezeichnet) belastet (Last F), so kann es zu einem Umkippen kommen. Aus diesem Grunde müssen die an der vorderen Unterseite 12A liegenden Ausgleichsbeine 43 verkürzt, und die an der hinteren Unterseite 12B liegenden Ausgleichsbeine 43 verlängert werden. Die benutzende Person muss lediglich die Last F weiter in Richtung der Vorderseite (rechts im Bild) des Gestells 10 aufbringen, und/oder ein entsprechendes Drehmoment nach vorne bereitstellen.

Ist das Ventil 32 geöffnet, kann die Hydraulikflüssigkeit aus den Fluidzylindern 42 mit höherem Druck (rechts im Bild) in solche mit niedrigerem Druck (links im Bild) fließen, angedeutet durch die punktierte Linie. Auf diese Weise kann das Gestell 10 auch bei schrägem oder gestuftem Untergrund, wie in **Figur 4** gezeigt, in eine im Wesentlichen aufrechte Lage gebracht werden, indem sich der Abstand d der Füße 40 vom Handgriff 20 verändert, bis sich der Schwerpunkt S schließlich wieder zwischen den Füßen der vorderen und hinteren Unterseite 12A, 12B befindet. Sobald das Gestell 10 ausgerichtet ist, wird das Ventil 32 mittels des Hebels 33 geschlossen. Die Länge der Ausgleichsbeine 43, und somit die Lage der Füße 40, ist dann auch bei Belastung nicht mehr veränderbar. Eine die Gehhilfe benutzende Person kann so das Gestell 10 auf einfache und sichere Weise an die Steigung oder das Gefälle des Untergrunds anpassen.

### Bezugszeichenliste

- 10: Gestell
- 11: Oberseite
- 12: Unterseite
- 12A: vordere Unterseite
- 12B: hintere Unterseite
- 20: Handgriff
- 30: Feststelleinrichtung
- 32: Ventil
- 33: Hebel
- 40: Füße
- 41: Kolben
- 42: Fluidzylinder
- 43: Ausgleichsbein

- L: Linie
- S: Schwerpunkt
- G: vertikale Richtung
- d: Abstand
- F: Last

## Patentansprüche

1. Gehhilfe, umfassend zwei beidseitig an der Oberseite (11) eines Gestells (10) angebrachte Handgriffe (20), sowie mindestens insgesamt drei an der vorderen und hinteren Unterseite (12A, 12B) des Gestells verteilte Füße (40), wobei die Gehhilfe ferner folgende Komponenten umfasst:
- mindestens zwei in ihrer Längsausdehnung verstellbare Ausgleichsbeine (43), welche jeweils ein mit einem Fluid beaufschlagbares, variables Innenvolumen aufweisen, wobei deren Länge von der Menge des jeweils in diesem Innenvolumen aufgenommenen Fluids abhängt;
- eine Feststelleinrichtung (30), mittels welcher ein Fluss zwischen den Ausgleichsbeinen (43) verhinderbar ist;
wobei
- die mindestens zwei Ausgleichsbeine (43) an dem Gestell (10) der Gehhilfe angeordnete Beine sind, und
- durch manuelles Belasten eines Ausgleichsbeins (43) bei geöffneter Feststelleinrichtung (30) das Fluid aus dessen Innenvolumen heraus in das oder die anderen Ausgleichsbeine (43) förderbar und so dieses Ausgleichsbein (43) verkürzbar ist, wohingegen das oder die Fluid aufnehmenden Ausgleichsbeine (43) dadurch verlängerbar sind,
so dass die Ausrichtung der Gehhilfe durch manuelles Belasten eines oder mehrerer Ausgleichsbeine (43) veränderbar ist.

2. Gehhilfe nach Anspruch 1, wobei der vertikale Abstand (d) der an einer vorderen Unterseite (12A) und/oder der an einer hinteren Unterseite (12B) angeordneten Füße (40) von den Handgriffen (20) bei gelöster Feststelleinrichtung (30) derart variabel ist, dass der Schwerpunkt (S) der an den Handgriffen (20) belasteten Gehhilfe in vertikaler Richtung (G) gesehen auch bei schrägem Untergrund jederzeit zwischen die an der vorderen und der hinteren Unterseite (12A, 12B) angeordneten Füße (40) verschiebbar ist.

3. Gehhilfe nach Anspruch 1 oder 2, wobei die Ausgleichsbeine (43) als einfachwirkende Fluidzylinder (42) ausgestaltet sind.

4. Gehhilfe nach Anspruch 1 oder 2, wobei die Ausgleichsbeine (43) als doppeltwirkende Fluidzylinder (42) ausgestaltet sind, und die Gehhilfe zwei Feststelleinrichtungen (30) aufweist.

5. Gehhilfe nach einem der vorhergehenden Ansprüche, wobei die Feststelleinrichtung (3) manuell von einer Ruheposition in eine Arbeitsposition betätigbar ist, und wobei in ihrer Ruheposition besagte Ausgleichsbeine (43) fluidisch voneinander trennbar, und in ihrer Arbeitsposition besagte Ausgleichsbeine (43) fluidisch miteinander verbindbar sind.

6. Gehhilfe nach einem der vorhergehenden Ansprüche, umfassend einen Ausgleichsbehälter, welcher mit den Ausgleichsbeinen (43) fluidisch verbunden ist, und dessen Volumen manuell oder automatisiert veränderbar ist.

7. Gehhilfe nach einem der vorhergehenden Ansprüche, bei welcher die Gehhilfe vier Beine umfasst, von denen
- die beiden vorderen Beine, und/oder
- die beiden hinteren Beine
Ausgleichsbeine (43) sind, und die Feststelleinrichtung (30) mittels eines an einer Oberseite (11) des Gestells (10) angeordneten Hebels (33) betätigbar ist.

8. Verfahren zur Verwendung einer Gehhilfe nach einem der vorhergehenden Ansprüche, umfassend die folgenden Schritte:
- Bereitstellen der Gehhilfe;
- Abstellen der Gehhilfe auf einem Untergrund;
- Lösen der Feststelleinrichtung (30);
- Auswahl mindestens eines zu verkürzenden Ausgleichsbeins (43) ;
- manuelles Belasten dieses Ausgleichsbeins (43) und somit Fördern von Fluid aus diesem hinaus, sowie zeitgleiches Aufnehmen dieses herausgeförderten Fluids in alle anderen Ausgleichsbeine (43), welche geringer als das manuell belastete Ausgleichsbein (43) belastet sind, so dass sich diese verlängern,
bis die gewünschte Ausrichtung der Gehhilfe erreicht ist;
- Verschließen der Feststelleinrichtung (30), so dass kein Fluid mehr zwischen den Ausgleichsbeinen (43) strömen kann.

9. Verfahren nach Anspruch 8 zur Verwendung einer Gehhilfe mit einem Ausgleichsbehälter nach Anspruch 6, wobei manuell oder automatisiert zur Erhöhung der Länge aller Ausgleichsbeine (43) Fluid aus dem Ausgleichsbehälter in diese hinein, oder zur Reduzierung der Länge aller Ausgleichsbeine (43) Fluid aus diesen hinaus in den Ausgleichsbehälter gefördert wird.

10. Verfahren zur Verwendung einer Gehhilfe nach Anspruch 1 bis 7, wobei zur auch bei Belastung kippfreien Aufstellung der Gehhilfe die vertikalen Abstände (d) zwischen den Handgriffen (20) und den einzelnen Füßen (40) solange variiert werden, bis sich der Schwerpunkt (S) der an den Handgriffen (20) belasteten Gehhilfe in vertikaler Richtung (G) gesehen auch bei schrägem Untergrund zwischen die an der vorderen und der hinteren Unterseite (12A, 12B) angeordneten Füße (40) verschiebt.
